# EUROPÄISCHE PATENTSCHRIFT

(11) **EP 2 731 696 B1**
(45) Veröffentlichungstag und Bekanntmachung des Hinweises auf die Patenterteilung: **09.11.2016**
(21) Anmeldenummer: 11735839.0
(22) Anmeldetag: 13.07.2011
(51) Int. Cl.: B01D 25/12, F28F 3/08

(54) **FILTERSCHICHT ZUR VERWENDUNG IN EINEM SCHICHTENFILTER SOWIE VORRICHTUNG FÜR EINE SCHICHTENFILTRATION**
FILTER LAYER FOR USE IN A LAYER FILTER AND DEVICE FOR LAYER FILTRATION
COUCHE FILTRANTE DESTINÉE À ÊTRE UTILISÉE DANS UN FILTRE À COUCHES ET DISPOSITIF DE FILTRATION PAR COUCHES

(43) Veröffentlichungstag der Anmeldung: 21.05.2014
(73) Patentinhaber: Filtrox AG, 9000 St. Gallen (CH)
(72) Erfinder: LOSER, Werner, CH-9242 Oberuzwil (CH); AMMANN, Bruno, CH-9402 Mörschwil (CH)
(74) Vertreter: Hepp Wenger Ryffel AG
(86) Internationale Anmeldenummer: PCT/EP2011/061900
(87) Internationale Veröffentlichungsnummer: WO 2013/007299

(56) Entgegenhaltungen:
- WO-A1-99/36741
- FR-A- 599 464
- FR-A- 963 184
- FR-A1- 2 095 247
- GB-A- 528 223
- GB-A- 663 909
- GB-A- 666 504
- US-A- 2 186 501
- US-A- 2 939 686
- US-A- 3 548 933
- US-A- 4 470 455

## Beschreibung

Die vorliegende Erfindung betrifft eine Filterschicht zur Verwendung in einem Schichtenfilter sowie eine Vorrichtung für eine Schichtenfiltration gemäss dem Oberbegriff der unabhängigen Ansprüche.

Bei der Schichtenfiltration werden Filterschichten zur Klär-, Fein- und Sterilfiltration von verschiedenen Fluiden verwendet. In bekannter Weise wird jeweils eine Filterschicht zwischen einer Trubfläche eines Filterelements und einer Klarfläche eines zweiten Filterelements eingesetzt. Je nach Filterleistung können mehrere Filterschichten zwischen einer Vielzahl von Filterelementen angeordnet werden. Diese sandwichartige Filteranordnung, auch Filterpaket genannt, wird üblicherweise in ein Gestell eingesetzt, wobei das Gestell über entsprechende Mittel verfügt, um Druck auf die Filterelemente sowie die Filterschichten auszuüben. Dieser Druck kann beispielsweise durch eine manuelle Pressvorrichtung ausgeübt werden.

Die Filtration erfolgt durch die Filterschichten, welche je nach Anwendungsgebiet über unterschiedliche Trenngrenzen verfügen können. Beispielsweise kann durch Verwendung von Filterschichten mit einer Trenngrenze unter 0.3 µm ein Fluid steril filtriert werden.

Die heute üblichen Vorrichtungen zur Schichtenfiltration verfügen über Filterelemente, welche als Klarelemente oder Trubelemente ausgebildet sind. Die Trubelemente dienen der Einspeisung des Unfiltrats auf die Filterschicht. Dementsprechend sind die Klarelemente derart ausgestaltet, dass eine Abführung des Filtrats ermöglicht wird. Die Filterelemente verfügen zur Einspeisung des Unfiltrats bzw. zur Abführung des Filtrats über Öffnungen, welche vorzugsweise über einen umlaufenden Flansch verfügen, so dass beim Zusammensetzen des Filterpakets die Öffnungen bzw. deren Flansche zusammenhängende Kanäle bilden, durch die entsprechend das Unfiltrat bzw. das Filtrat fliessen können.

Ferner können die Filterschichten auch als Trägerschicht für ein Filterhilfsmittel ausgebildet sein. Derartige Filterschichten können beispielsweise für eine Anschwemmfiltration verwendet werden.

Im Stand der Technik sind eine Vielzahl von unterschiedlichen Filterschichten sowie an Schichtenfiltervorrichtungen vorbekannt. Ein wesentliches Problem beim Zusammenfügen eines Filterpakets ist die korrekte Ausrichtung der Filterschichten in der Filtervorrichtung. Häufig erfolgt die vertikale Positionierung der Filterschichten über zwei unterhalb des Filterpakets verlaufenden Schichtenstützen. Die horizontale Ausrichtung der Filterschichten erfolgt entweder über zwei Stangen, welche seitlich des Filterpakets in der Filtervorrichtung angebracht sind oder manuell.

Ein wesentlicher Nachteil insbesondere der horizontalen Ausrichtung der Filterschichten mittels seitlicher Tragstangen ist die mögliche Verkantung der Filterschichten, was zu einer nicht deckungsgleichen Ausrichtung aller Filterschichten zwischen den Filterelementen führen kann. Eine Verkantung der Filterschichten eintreten, wenn die Filterschichten leicht breiter sind als der freie Abstand der Tragstangen, z.B. infolge zu grosser oder nicht eingehaltener Fehlertoleranzen bei der Herstellung der Filterschichten. Da für die Ausbildung der Filtratleitungen und/oder der Unfiltratleitungen eine genaue Ausrichtung der Filterelemente und Filterschichten erfolgen muss, erfordert die heute gebräuchliche Ausrichtung mittels Tragstangen häufig eine manuelle Korrektur, was die Effizienz beim Einsetzen der Filterschichten reduziert. Ausserdem kann es bei einer nicht korrekten Ausrichtung der jeweiligen Öffnungen zu einer Vermischung von Unfiltrat mit dem Filtrat kommen, was die Filterleistung erheblich verschlechtern kann.

Ein weiterer Nachteil besteht darin, dass die Breite der Filterschichten nicht primär durch die Breite der Filterelemente bestimmt wird, sondern durch den Abstand zwischen den Tragstangen. Dadurch erhalten die Filterschichten gegenüber den Filterelementen ein beträchtliches Übermass, was die Materialkosten bei der Fertigung erhöht.

Eine weitere Möglichkeit besteht darin, die Filterschichten allesamt manuell auszurichten, was jedoch aufgrund des hohen zeitlichen Aufwandes in den allermeisten Fällen nicht effizient ist.

Die GB 500 811 beschreibt eine Filteranlage mit einer Vielzahl von Filterschichten, wobei die Filterschichten über an deren Oberseite angebrachten Befestigungsöffnungen in eine Filterapparatur eingesetzt werden können. Um die Filterschichten alle gleich auszurichten, ist zusätzlich an der Unterseite der Apparatur eine Führungsschiene angebracht, in welche entsprechende Bügel, welche an der Unterseite der Filterschichten angeordnet sind, eingreifen können.

Diese Konfiguration hat jedoch den Nachteil, dass sich einzelne Filterschichten beim Einsetzen verkanten können, was eine manuelle Korrektur der Ausrichtung erforderlich macht. Ausserdem ist durch die Befestigung über Befestigungsöffnungen nur ein sequentielles Einsetzen bzw. Ausbauen der Filterschichten möglich, wobei einzelne Filterschichten nicht aus dem Filterpaket entfernt werden können, ohne dass angrenzende Filterschichten dem Filterpaket ebenfalls entnommen werden müssen.
Eine Aufgabe der vorliegenden Erfindung ist es demnach, die Nachteile des Bekannten zu vermeiden und insbesondere eine Filterschicht zu schaffen, welche ohne Verkanten in der richtigen Ausrichtung in eine Filtervorrichtung eingesetzt werden kann. Diese Aufgabe wird mit einer Filterschicht gemäss Anspruch 1 gelöst.
Die erfindungsgemässe Filterschicht verfügt auf mindestens einer insbesondere gerade verlaufenden Seite über wenigstens zwei Aussparungen. Die Aussparungen sind bevorzugt als in einer geradlinigen Seite nach innen versetzte Aussparungen vorgesehen.

Die Filterschicht ist zur Verwendung in einem Schichtenfilter geeignet. Dabei kann die Filterschicht beispielsweise in einem Filterpaket zur Tiefenfiltration und/oder zur Anschwemmfiltration verwendet werden.

Die wenigstens zwei Aussparungen können auf entsprechende Führungselemente, insbesondere Führungsschienen einer Filtervorrichtung aufgelegt werden. Da bei allen Filterschichten eines Filterpakets entsprechende Aussparungen vorhanden sind, können somit sämtliche Filterschichten in einem Filterpaket deckungsgleich ausgerichtet werden. Zudem ermöglicht die wenigstens zwei Aussparungen eine gleitende Bewegung auf einem Führungselement bzw. einer Führungsschiene der Filtriervorrichtung, wobei je nach Bedarf eine und/oder mehrere Filterschichten aus dem Filterpaket entnommen werden können, ohne dass die angrenzenden Filterschichten ebenfalls aus dem Filterpaket entfernt werden müssen. Dank der Aussparungen können die Filterschichten horizontal ausgerichtet werden, ohne dass eine seitliche Anlage an seitlichen Stangen erfolgen muss. Das Problem des Verkantens besteht dabei nicht. Ausserdem kann die Breite solcher Schichten unabhängig vom Tragstangenabstand gewählt werden.
Die Aussparungen können dabei eine beliebige geometrische Form aufweisen. Insbesondere können die Aussparungen in einer Fläche, welche in Richtung der Wirkrichtung der Schwerkraft liegt, eine rechteckige, runde, dreieckige oder beliebig polygonale Form aufweisen.

Bevorzugt weist die Aussparung eine seitliche Anschlagsfläche mit einer Höhe von mindestens 5 mm, bevorzugt von mindestens 10 mm auf. Als Höhe der seitlichen Anschlagfläche im Sinne der vorliegenden Anmeldung wird die Ausdehnung einer Fläche der Aussparung verstanden, welche sich im Wesentlichen in Richtung der Wirkrichtung der Schwerkraft erstreckt. Bei einer rechteckigen Aussparung ist der seitliche Anschlag demnach die Seitenlänge derjenigen Seitenflächen des Rechtecks, welche in Richtung der Wirkrichtung der Schwerkraft zeigen. Bei einer runden Aussparung entspricht die seitliche Anschlagfläche der Länge des Kreisbogenteils zwischen einem Anfangswinkel von 0° in Bezug auf die Wirkrichtung der Schwerkraft bis zu dem Winkel, bei dem die gerundete Aussparung endet. Dieser minimale seitliche Anschlag ermöglicht eine genaue Führung der Filterschicht auf einem Führungselement oder einer Führungsschiene sowie eine exakte Ausrichtung der Filterschichten zueinander. Ausserdem ermöglicht dies das Verschieben einzelner Filterschichten oder zu einem Filterpaket zusammengeschobener Filterschichten entlang eines Führungselements bzw. einer Führungsschiene.

Die Aussparung kann derart ausgestaltet sein, dass ihre gesamte Fläche auf einem Führungselement oder einer Führungsschiene aufliegt. Bevorzugterweise liegt die Aussparung jedoch nur mit einem oder zwei Auflagebereiche, welche eine oder zwei Teilfläche(n) der Fläche der Aussparung ausmachen, auf einem Führungselement oder einer Führungsschiene auf. Diese Auflagebereiche ermöglichen eine weitgehende Selbstzentrierung der Aussparung auf einem Führungselement. Bei einer rechteckigen oder gerundeten Ausführungsform der Aussparung befinden sich diese Auflagebereiche vorzugsweise nicht auf der mindestens einen Anschlagsfläche der Aussparung. Bei einzelnen geometrischen Formen der mindestens einen Aussparung, insbesondere bei einer dreieckigen Ausführungsform, können sich die Auflagebereiche jedoch auch auf der Anschlagsfläche befinden.

Bevorzugt sind die wenigstens zwei Aussparungen auf derjenigen Seite der Filterschicht angeordnet, welche beim bestimmungsgemässen Gebrauch der Filterschicht in Richtung der Wirkrichtung der Schwerkraft nach unten zeigt. Als bestimmungsgemässen Gebrauch im Sinne der vorliegenden Anmeldung wird die Verwendung mindestens einer Filterschicht in einer Filtervorrichtung verstanden. Dadurch, dass die wenigstens zwei Aussparungen auf derjenigen Seite der Filterschicht liegen, welche in Richtung der Wirkrichtung der Schwerkraft zeigt, wird sowohl das horizontale wie auch das vertikale Ausrichten der Filterschicht in einer Filtervorrichtung ermöglicht, da dann die Filterschicht mit jeder Aussparung auf mindestens einem entsprechenden Führungselement oder einer Führungsschiene aufliegen kann.
Vorzugsweise weist die Filterschicht eine rechteckige oder quadratische Form auf, wobei die Ecken abgerundet vorliegen können.

Einerseits lassen sich rechteckige bzw. quadratische Filterschichten aus Materialbögen mit nur geringem Ausschuss herstellen, insbesondere ausstanzen. Andererseits ermöglicht diese Form eine Platz sparende Lagerung der Filterschichten. Die abgerundeten Ecken erleichtern das Verpacken der Filterschicht, da im Gegensatz zu spitzigen Ecken beim Verpacken die abgerundeten Ecken weniger leicht geknickt werden, beispielsweise durch das Einschrumpfen von Verpackungsfolie.
Bevorzugt weist die Seite der Filterschicht, auf welcher sich die wenigstens eine Aussparung befindet, eine Länge zwischen 200 mm und 1200 mm auf. Besonders bevorzugt weist die Seite, auf welcher sich die wenigstens eine Aussparung befindet, eine Länge von 400 mm oder eine Länge von 600 mm auf.

Die Filterschicht weist zwei Aussparungen auf einer Seite auf, welche einen Abstand von zwischen 150 mm und 700 mm zueinander aufweisen.

Die Aussparung ist bevorzugt in Form eines Halbkreises mit einem Radius R von 5 mm bis 30 mm ausgestaltet. Das Vorliegen der Aussparung als Halbkreis hat den Vorteil, dass sich die Filterschicht durch die runde Ausgestaltung beim Verschieben auf einem Führungselement bzw. einer Führungsschiene nicht verkanten kann.
Die Filterschicht besteht im Wesentlichen aus Zellulose und bevorzugt Kieselgur und/oder einem Bindeharz, wobei der Gewichtsanteil der Zellulose von 50 Gew.-% bis zu 100 Gew.-% betragen kann. Dadurch lässt sich die Filterschicht einfach und günstig aus einem natürlichen Rohstoff herstellen, wobei die Porosität der Filterschicht relativ genau eingestellt werden kann.

Bevorzugt ist die Filterschicht derart ausgestaltet, dass Partikel mit einer Grösse von über 0.04 µm bis über 35 µm nicht durch die Filterschicht gelangen können. Durch eine Ausschlussgrösse in diesem Bereich lässt sich für verschiedene Anwendungen eine passende Filterschicht gemäss der vorliegenden Erfindung herstellen.

Die Filterschicht kann vorzugsweise auch als Trägerschicht für ein Filterhilfsmittel, insbesondere zur Verwendung in einer Anschwemmfiltration ausgestaltet sein. Dabei dient die Filterschicht nicht primär zum Filtern, sondern bietet einem Filterhilfsmittel wie beispielsweise Kieselgur eine entsprechende Trägerfläche.

Diese Erfindung betrifft ferner eine Vorrichtung zur Verwendung in einer Schichtenfiltration gemäss Anspruch 12.

Die erfindungsgemässe Vorrichtung umfasst ein Gestell mit mindestens einer Filterschicht gemäss der vorliegenden Erfindung. Ferner weist die Vorrichtung eine Anfangsplatte sowie eine Endplatte auf, welche vertikal im Gestell aufnehmbar sind und zwischen denen die mindestens eine Filterschicht angeordnet ist. Weiter sind an der Vorrichtung Mittel zum Zusammenpressen der Anfangsplatte, der mindestens einen Filterschicht sowie der Endplatte angeordnet. Das Gestell verfügt über mindestens zwei parallel zueinander und in Richtung der Wirkrichtung der Schwerkraft unterhalb der mindestens einen Filterschicht und der Endplatte verlaufende Schichtenstützen. Die Grösse und Form der Aussparungen der mindestens einen Filterschicht entsprechen der Anzahl und dem Abstand der Schichtenstützen des Gestells.

Bei einer solchen Konfiguration lässt sich die mindestens eine Filterschicht durch Aufnahme der Schichtenstützen in den Aussparungen sowohl vertikal als auch horizontal korrekt ausrichten. Dadurch ist bei Anordnung mehrer Filterschichten zu einem Filterpaket zwischen der Anfangsplatte und der Endplatte eine deckungsgleiche Anordnung der Filterschichten erreichbar. Dies ist insbesondere dann vorteilhaft, wenn die Filterschichten über Öffnungen verfügen, durch welche eine Filtratleitung und/oder eine Unfiltratleitung aufgenommen werden können.

Die Mittel zum Zusammenpressen der Platten können je nach Anwendungszweck und Grösse der Vorrichtung unterschiedlich sein. Bevorzugt handelt es sich dabei um eine hydraulische Pressvorrichtung. Alternativ kann auch eine manuelle Pressvorrichtung, wie ein Handrad oder dergleichen verwendet werden.

Die Aussparungen der mindestens einen Filterschicht sind bevorzugt gerundet ausgestaltet, wobei der Radius der Aussparungen etwas grösser ist als der Radius der entsprechenden Schichtenstützen. Dadurch ergibt sich eine Selbstzentrierung der Aussparungen auf den Schichtenstützen.

Bevorzugterweise weist die Vorrichtung mindestens ein zusätzliches, zwischen der mindestens einen Filterschicht und der Anfangsplatte, der Endplatte und/oder zwischen zwei Filterschichten einsetzbares Filterelement auf. Dieses Filterelement ist zum Filtratabfluss und/oder zum Unfiltratzufluss geeignet. Durch ein solches Filterelement kann die Zu- bzw. Ableitung von Unfiltrat sowie Filtrat zu jeder im Gestell vorhandenen Filterschicht ermöglicht werden. Solche Filterelemente sind im Stand der Technik bekannt.

Vorzugsweise weist die Vorrichtung mindestens drei Filterschichten sowie mindestens zwei Filterelemente auf, wobei wenigstens ein Filterelement als Filtratabfluss und wenigstens ein zweites Filterelement als Unfiltratzufluss ausgestaltet sind.

Die Anfangsplatte, die Endplatte und/oder die Filterelemente verfügen vorzugsweise mindestens über zwei Öffnungen, welche beim Anordnen der Anfangsplatte, der Endplatte und/oder des mindestens einen Filterelements bei bestimmungsgemässer Anordnung koaxial mit den mindestens zwei Öffnungen der mindestens einen Filterschicht angeordnet sind. Dadurch lassen sich eine entsprechende Unfiltratleitung sowie eine Filtratleitung beim Zusammenfügen eines Filterpakets erzeugen.

Vorzugsweise weist wenigstens eine der mindestens zwei Öffnungen der Anfangsplatte, der Endplatte und/oder der Filterelemente einen umlaufenden Flansch auf, welcher zur Bildung einer Unfiltratleitung und/oder einer Filtratleitung durch die wenigstens eine der mindestens zwei Öffnungen der mindestens einen Filterschicht eingeführt werden kann. Durch diesen wenigstens einen Flansch lässt sich eine Filtrat- und/oder Unfiltratleitung erzeugen, welche den Kontakt des Unfiltrats bzw. des Filtrats mit der Filterschicht verhindert. Dadurch wird ein Vermischen des Unfiltrats wie des Filtrats über die Leitungen verhindert.

Alternativ kann bei der erfindungsgemässen Vorrichtung das Gestell über mindestens eine Unfiltratzuleitung sowie über mindestens eine Filtratableitung verfügen, welche sich mit den entsprechenden Filterelementen verbinden lassen, beispielsweise über Rohrverbindungen. Dadurch können auch Filterschichten sowie Filterelement verwendet werden, welche über keine Öffnungen zur Aufnahme einer Unfiltratleitung und/oder einer Filtratleitung aufweisen.

Weitere Details und Ausführungsformen der vorliegenden Erfindung lassen sich aus der folgenden Beschreibung der Figuren entnehmen. Es zeigen:
- Fig. 1:: Eine Ansicht einer erfindungsgemässen Filterschicht;
- Fig. 2:: eine perspektivische Ansicht einer erfindungsgemässen Filtervorrichtung;
- Fig. 3:: einen Querschnitt durch die Filtervorrichtung der Figur 2;
- Fig. 4:: einen Querschnitt durch eine alternative Ausführungsform einer Filtervorrichtung; und
- Fig. 5a-5b:: Detailansichten von selbstzentrierenden Aussparungen.

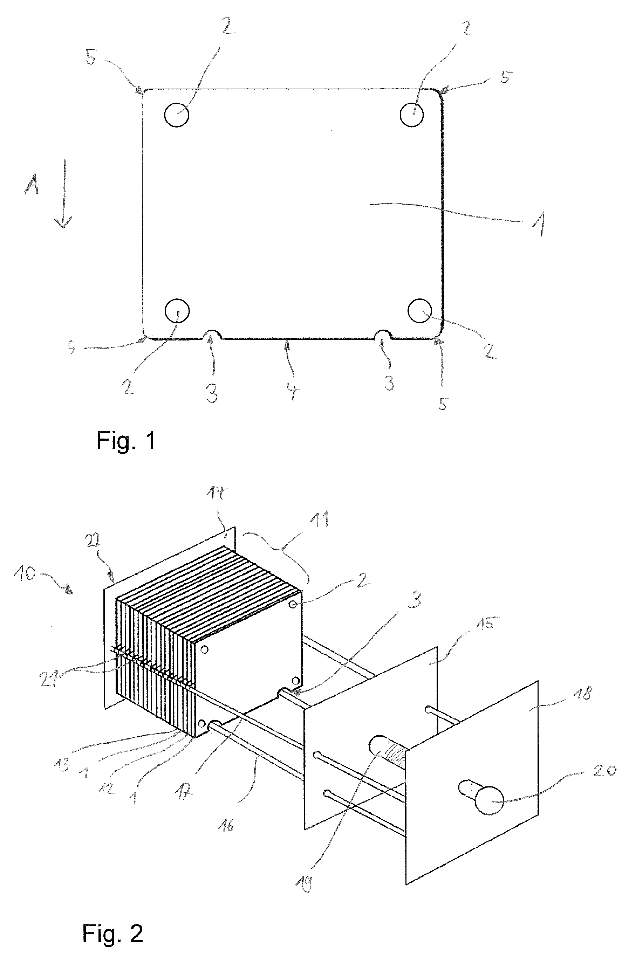

Die Figur 1 zeigt eine erfindungsgemässe Filterschicht 1. Die Filterschicht 1 verfügt in der gezeigten Ausführungsform über vier Öffnungen 2 zur Durchführung einer Filtrat- oder Unfiltratleitung. Die Filterschicht 1 hat eine rechteckige Form, wobei die Ecken 5 abgerundet sind. An derjenigen Seite 4, welche bei bestimmungsgemässen Gebrauch der Filterschicht 1 in Richtung der Wirkrichtung der Schwerkraft A zeigt, sind zwei Aussparungen 3 angeordnet. Die Aussparungen 3 sind in der Form von Halbkreisen ausgestaltet. Die Filterschicht verfügt über eine definierte Rückhaltegrenze für Partikel im Unfiltrat.

Auf der Figur 2 ist eine erfindungsgemässe Filtervorrichtung 10 abgebildet. Die Filtervorrichtung 10 verfügt über mehrere erfindugnsgemässe Filterschichten 1, wobei jede Filterschicht 1 zwischen als Trubelemente 12 und Klarelemente 13 ausgestaltete Filterelemente angeordnet ist. Diese Anordnung der Filterschichten 1 mit den Filterelementen ergibt ein Filterpaket 11. Die Filtervorrichtung 10 umfasst ferner ein Gestell 22. Das Gestell 22 verfügt über eine Anfangsplatte 14 und eine Endplatte 15, zwischen denen das Filterpaket 11 eingelegt wird. Die Endplatte 15 kann durch entsprechende Mittel in Richtung der Anfangsplatte 14 gedrückt werden, wobei das Filterpaket 11 zusammengedrückt wird. Diese Mittel umfassen bei der gezeigten Ausführungsform eine Gewindestange 19, welche über ein Handrad 20 gedreht werden kann. Die Gewindestange ist in einer Abschlussplatte 18 des Gestells 22 eingesetzt. Die Endplatte gleitet entlang von an der Unterseite des Gestells 22 angeordneten Schichtenstützen 16 sowie an den lateralen Seiten des Gestells 22 angebrachte Tragstangen 17. Die Filterelemente 12, 13 sind mittels seitlichen Haken 21 an den seitlichen Tragstangen 17 aufgehängt. Die Aussparungen 3 der Filterschichten 1 sind dabei derart angeordnet, dass sie auf die Schichtenstützen 16 aufgelegt werden können. Dadurch ist eine exakte Ausrichtung der einzelnen Filterschichten 1 möglich, wobei die Öffnungen 2 zur Aufnahme von Filtrat- und/oder Unfiltratleitungen der einzelnen Filterschichten genau aufeinander ausgerichtet werden können.

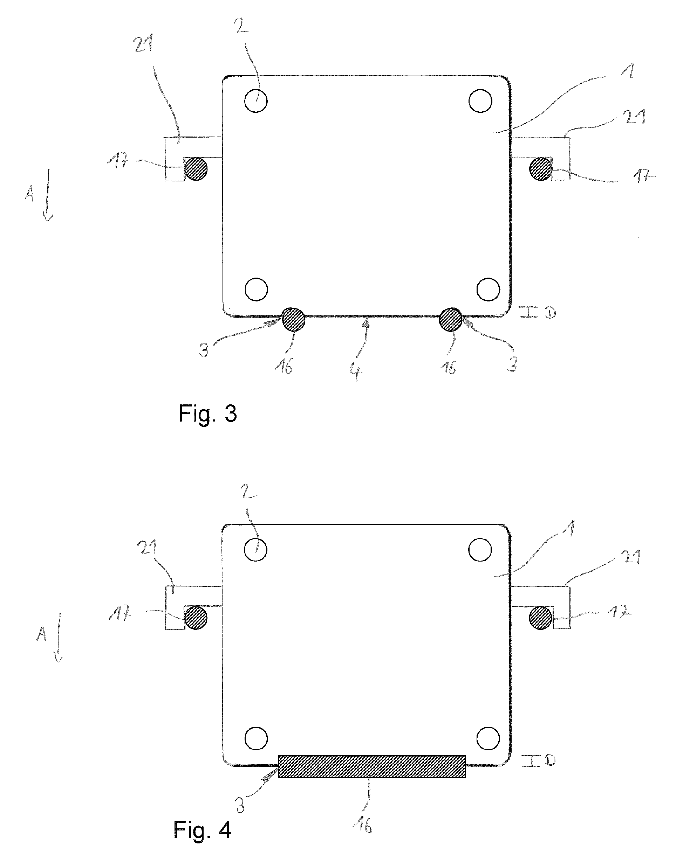

Die Figur 3 zeigt einen Querschnitt durch die Filtervorrichtung 10 aus der Figur 2. Auf dieser Figur ist ersichtlich, wie die Aussparungen 3 der Filterschicht 1 auf den Schichtenstützen 16 aufliegen. Zwischen den Tragstangen 17 und der Filterschicht 1 befindet sich eine Lücke. Die Breite der Filterschicht 1 kann daher unabhängig vom Abstand der Tragstangen gewählt werden. Die Haken 21 der Filterelemente 12, 13, welche sich vor beziehungsweise hinter der Filterschicht 1 befinden, liegen auf den Tragstangen 17 auf, was eine genaue Ausrichtung der Filterelemente 12, 13 ermöglicht. Die Aussparungen 3 weisen eine seitliche Anschlagfläche mit einer Höhe D auf, die mehr als 5 mm beträgt. Die Ausrichtung der Filterschichten 1 erfolgt nur über die Schichtenstützen 16 und die Aussparungen 3. Durch das genaue Ausrichten der Filterschichten 1 und der Filterelemente 12, 13 werden die Öffnungen 2 exakt zueinander ausgerichtet.

Die Figur 4 zeigt einen Querschnitt einer alternativen Ausführungsform einer Filtervorrichtung 10. Dabei weist die Schichtenstütze 16 einen rechteckigen Querschnitt auf. Entsprechend weist auch die Aussparung 3 der Filterschicht 1 in der Ebene, welche in Richtung der Wirkrichtung der Schwerkraft A liegt, eine rechteckige Form auf. Der Anschlaghöhe D der Aussparung ist wiederum über 5 mm. Es ist daher auch denkbar, nur eine grosse Aussparung vorzusehen, die auf zwei Schichtenstützen platziert werden kann. Dabei kontaktieren jeweils die äusseren Seitenflächen der Schichtenstützen je eine Anschlagsfläche der Aussparung.

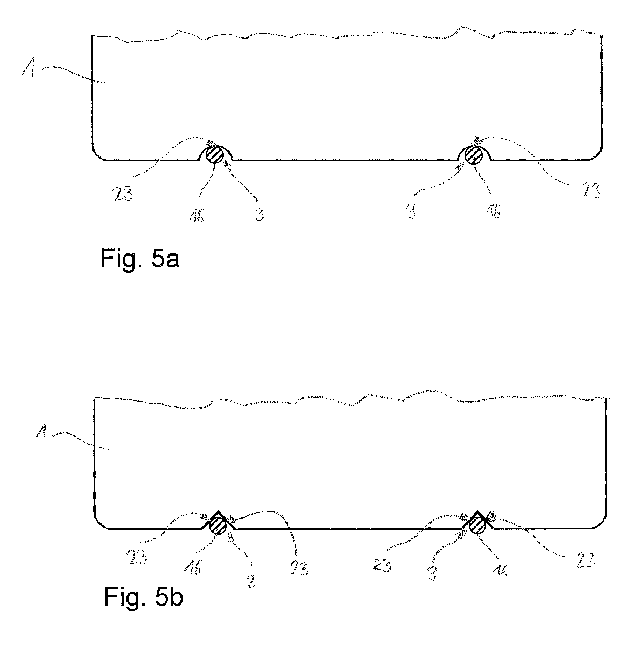

Auf der Figur 5a ist eine Detailansicht einer weiteren Ausführungsform einer Filtervorrichtung 10 dargestellt. Die kreisförmigen Aussparungen 3 der Filterschicht 1 weisen einen grösseren Radius auf als den Radius der Schichtenstützen 16. Aufgrund dieser Konfiguration liegen die Aussparungen 3 nur mit einem Teilbereich 23 der Aussparungen 3 auf den Schichtenstützen 16 auf. Zudem erfolgt durch Einwirkung der Schwerkraft auf die Filterschicht 1 eine Zentrierung der Schichtenstützen 16 in den Aussparungen 3.

Die Figur 5b zeigt eine alternative Ausführungsform einer Filtervorrichtung 10. Die Aussparungen 3 sind dreieckig ausgebildet. Bei dieser Konfiguration liegen die Aussparungen 3 mit zwei Teilbereichen 23 auf den Schichtenstützen 16 auf. Wie in der Ausführungsform der Figur 5a erfolgt aufgrund der Form der Aussparungen 3 eine Selbstzentrierung der Aussparungen 3 auf den Schichtenstützen 16.

## Patentansprüche

1. Filterschicht (1) zur Filtration von Fluiden zur Verwendung in einem Schichtenfilter, **dadurch gekennzeichnet, dass** die Filterschicht (1) auf mindestens einer Seite (4) wenigstens zwei Aussparungen (3) zum Auflegen und Ausrichten der Filterschicht (1) auf Führungselementen einer Filtervorrichtung aufweist.

2. Filterschicht gemäss Anspruch 1, **dadurch gekennzeichnet, dass** die Filterschicht mindestens zwei Öffnungen (2) zur Aufnahme einer Unfiltratleitung und/oder einer Filtratleitung durch die Filterschicht (1) aufweist.

3. Filterschicht gemäss einem der Ansprüche 1 oder 2, **dadurch gekennzeichnet, dass** die mindestens zwei Aussparungen (3) eine seitliche Anschlagsfläche mit einer Höhe (D) von mindestens 5 mm, bevorzugt von mindestens 10 mm aufweisen.

4. Filterschicht gemäss einem der Ansprüche 1 bis 3, **dadurch gekennzeichnet, dass** die mindestens zwei Aussparungen (3) auf derjenigen Seite (4) der Filterschicht (1) angeordnet sind, welche beim bestimmungsgemässen Gebrauch der Filterschicht (1) in Richtung der Wirkrichtung der Schwerkraft (A) zeigt.

5. Filterschicht gemäss einem der Ansprüche 1 bis 4, **dadurch gekennzeichnet, dass** die Filterschicht (1) eine rechteckige oder quadratische Form aufweist, wobei die Ecken (5) bevorzugt abgerundet vorliegen.

6. Filterschicht gemäss einem der Ansprüche 1 bis 5, **dadurch gekennzeichnet, dass** die Länge der Seite (4), auf welcher sich die mindestens zwei Aussparungen (3) befinden, zwischen 200 mm und 1250 mm beträgt.

7. Filterschicht gemäss einem der Ansprüche 1 bis 6, **dadurch gekennzeichnet, dass** die Länge der Seite (4), auf welcher sich die mindestens zwei Aussparungen (3) befinden, eine Länge von 200 mm, 400 mm, 600 mm, 800 mm oder 1200 mm aufweist.

8. Filterschicht gemäss einem der Ansprüche 1 bis 7, **dadurch gekennzeichnet, dass** die Filterschicht (1) zwei Aussparungen (3) aufweist, welche in einem Abstand von 150 mm bis 800 mm zueinander angeordnet sind.

9. Filterschicht gemäss einem der Ansprüche 1 bis 8, **dadurch gekennzeichnet, dass** die mindestens zwei Aussparungen (3) in Form eines Halbkreises mit Radius R von 4 mm bis 40 mm vorliegen.

10. Filterschicht gemäss einem der Ansprüche 1 bis 9, **dadurch gekennzeichnet, dass** die Filterschicht (1) derart ausgestaltet ist, dass Partikel mit einer Grösse von über 0.04 µm bis über 35 µm von der Filterschicht (1) zurückgehalten werden.

11. Filterschicht gemäss einem der Ansprüche 1 bis 10, **dadurch gekennzeichnet, dass** die Filterschicht (1) als Trägerschicht für ein Filterhilfsmittel, insbesondere zur Verwendung in einer Anschwemmfiltration, ausgestaltet ist.

12. Vorrichtung zur Verwendung in einer Schichtenfiltration, umfassend
ein Gestell (22) mit mindestens einer Filterschicht (1) gemäss einem der Ansprüche 1 bis 11;
eine Anfangsplatte (14) sowie eine Endplatte (15), welche vertikal im Gestell (22) aufnehmbar sind und zwischen denen die mindestens eine Filterschicht (1) angeordnet ist; Mittel (19,20) zum Zusammenpressen der Anfangsplatte (14), der mindestens einen Filterschicht (1) sowie der Endplatte (15); und
mindestens zwei parallel zueinander und in Richtung der Wirkrichtung der Schwerkraft (A) unter der mindestens einen Filterschicht (1) und der Endplatte (15) verlaufende Schichtenstützen (16),
**dadurch gekennzeichnet, dass**
die Grösse und Form der Aussparungen (3) der mindestens einen Filterschicht (1) der Anzahl und dem Abstand der Schichtenstützen (16) des Gestells (22) entsprechen.

13. Vorrichtung gemäss Anspruch 12, **dadurch gekennzeichnet, dass** die Vorrichtung (10) mindestens ein zusätzliches, zwischen der mindestens einen Filterschicht (1) und der Anfangsplatte (14), der Endplatte (15) und/oder zwischen zwei Filterschichten (1) einsetzbares Filterelement (12,13) aufweist, welches zum Filtratabfluss und/oder zum Unfiltratzufluss geeignet ist.

14. Vorrichtung gemäss einem der Ansprüche 12 oder 13, **dadurch gekennzeichnet, dass** die Anfangsplatte (14), die Endplatte (15) und/oder das mindestens eine Filterelement (12, 13) mindestens zwei Öffnungen aufweisen, welche beim Anordnen der Anfangsplatte (14), der Endplatte (15) und/oder des mindestens einen Filterelements (12, 13) bei bestimmungsgemässer Anordnung koaxial mit den mindestens zwei Öffnungen (2) der mindestens einen Filterschicht (1) angeordnet sind.

15. Vorrichtung gemäss Anspruch 14, **dadurch gekennzeichnet, dass** wenigstens eine der mindestens zwei Öffnungen der Anfangsplatte (14), der Endplatte (15) und/oder der Filterelemente (12,13) einen umlaufenden Flansch aufweisen, welcher zur Bildung einer Unfiltratleitung und/oder einer Filtratleitung durch wenigstens eine der mindestens zwei Öffnungen (2) der mindestens einen Filterschicht (1) eingeführt werden kann.

## Claims

1. Filter layer (1) for the filtration of fluids, for use in a layer filter, **characterized in that** the filter layer (1) has, on at least one side (4), at least two cutouts (3) for placing and orienting the filter layer (1) on guide elements of a filter device.

2. Filter layer according to Claim 1, **characterized in that** the filter layer has at least two openings (2) for receiving an unfiltrate line and/or a filtrate line through the filter layer (1).

3. Filter layer according to either of Claims 1 and 2, **characterized in that** the at least two cutouts (3) have a lateral abutment face with a height (D) of at least 5 mm, preferably of at least 10 mm.

4. Filter layer according to one of Claims 1 to 3, **characterized in that** the at least two cutouts (3) are arranged on that side (4) of the filter layer (1) which, during proper use of the filter layer (1), is oriented in the direction in which gravitational force (A) acts.

5. Filter layer according to one of Claims 1 to 4, **characterized in that** the filter layer (1) is rectangular or square, the corners (5) preferably being rounded.

6. Filter layer according to one of Claims 1 to 5, **characterized in that** the length of the side (4), on which the at least two cutouts (3) are located, is between 200 mm and 1250 mm.

7. Filter layer according to one of Claims 1 to 6, **characterized in that** the length of the side (4), on which the at least two cutouts (3) are located, has a length of 200 mm, 400 mm, 600 mm, 800 mm or 1200 mm.

8. Filter layer according to one of Claims 1 to 7, **characterized in that** the filter layer (1) has two cutouts (3) which are arranged at a distance of between 150 mm and 800 mm from one another.

9. Filter layer according to one of Claims 1 to 8, **characterized in that** the at least two cutouts (3) are in the form of a semicircle of radius R between 4 mm and 40 mm.

10. Filter layer according to one of Claims 1 to 9, **characterized in that** the filter layer (1) is configured such that particles with a size of greater than 0.04 µm to greater than 35 µm are retained by the filter layer (1).

11. Filter layer according to one of Claims 1 to 10, **characterized in that** the filter layer (1) is configured as a carrier layer for a filter aid, in particular for use in precoat filtration.

12. Device for use in layer filtration, comprising
a frame (22) with at least one filter layer (1) according to one of Claims 1 to 11;
a starting plate (14) and an end plate (15) which can be received vertically in the frame (22) and between which the at least one filter layer (1) is arranged;
means (19, 20) for pressing together the starting plate (14), the at least one filter layer (1) and the end plate (15); and
at least two layer supports (16) which run parallel to one another and below, in the direction in which gravitational force (A) acts, the at least one filter layer (1) and the end plate (15),
**characterized in that**
the size and shape of the cutouts (3) of the at least one filter layer (1) correspond to the number and spacing of the layer supports (16) of the frame (22).

13. Device according to Claim 12, **characterized in that** the device (10) has at least one additional filter element (12, 13) which can be inserted between the at least one filter layer (1) and the starting plate (14), the end plate (15) and/or between two filter layers (1), and which is suitable for the removal of filtrate and/or for the supply of unfiltrate.

14. Device according to either of Claims 12 and 13, **characterized in that** the starting plate (14), the end plate (15) and/or the at least one filter element (12, 13) have at least two openings which, when arranging the starting plate (14), the end plate (15) and/or the at least one filter element (12, 13) in the proper arrangement are arranged coaxially with the at least two openings (2) of the at least one filter layer (1).

15. Device according to Claim 14, **characterized in that** at least one of the at least two openings of the starting plate (14), the end plate (15) and/or the filter elements (12, 13) has a peripheral flange which can be inserted through at least one of the at least two openings (2) of the at least one filter layer (1) for the purpose of forming an unfiltrate line and/or a filtrate line.

## Revendications

1. Couche filtrante (1) pour la filtration de fluides destinée à être utilisée dans un filtre à couches, **caractérisée en ce que** la couche filtrante (1) comporte sur au moins un côté (4) au moins deux évidements (3) pour appliquer et orienter la couche filtrante (1) sur les éléments de guidage d'un dispositif filtrant.

2. Couche filtrante selon la revendication 1, **caractérisée en ce que** la couche filtrante comporte au moins deux ouvertures (2) pour recevoir une conduite d'infiltrat et/ou une conduite de filtrat à travers la couche filtrante (1).

3. Couche filtrante selon l'une quelconque des revendications 1 ou 2, **caractérisée en ce que** les au moins deux évidements (3) comportent une surface de butée latérale avec une hauteur (D) d'au moins 5 mm, de façon préférée d'au moins 10 mm.

4. Couche filtrante selon l'une quelconque des revendications 1 à 3, **caractérisée en ce que** les au moins deux évidements (3) sont disposés du côté (4) de la couche filtrante (1) orienté, lors de l'utilisation conforme à sa destination de la couche filtrante (1), en direction de la direction d'action de la pesanteur (A).

5. Couche filtrante selon l'une quelconque des revendications 1 à 4, **caractérisée en ce que** la couche filtrante (1) présente une forme rectangulaire ou carrée, les coins (5) étant de façon préférée arrondis.

6. Couche filtrante selon l'une quelconque des revendications 1 à 5, **caractérisée en ce que** la longueur du côté (4) sur lequel les au moins deux évidements (3) se trouvent est comprise entre 200 mm et 1250 mm.

7. Couche filtrante selon l'une quelconque des revendications 1 à 6, **caractérisée en ce que** la longueur du côté (4) sur lequel les au moins deux évidements (3) se trouvent présente une longueur de 200 mm, 400 mm, 600 mm, 800 mm ou 1200 mm.

8. Couche filtrante selon l'une quelconque des revendications 1 à 7, **caractérisée en ce que** la couche filtrante (1) comporte deux évidements (3) disposés à une distance de 150 mm à 800 mm l'un par rapport à l'autre.

9. Couche filtrante selon l'une quelconque des revendications 1 à 8, **caractérisée en ce que** les au moins deux évidements (3) prennent la forme d'un demi-cercle de rayon R de 4 mm à 40 mm.

10. Couche filtrante selon l'une quelconque des revendications 1 à 9, **caractérisée en ce que** la couche filtrante (1) est configurée de telle sorte que les particules dont la taille dépasse 0,04 µm à 35 µm sont retenues par la couche filtrante (1).

11. Couche filtrante selon l'une quelconque des revendications 1 à 10, **caractérisée en ce que** la couche filtrante (1) est configurée sous la forme d'une couche de support prévue pour un moyen auxiliaire filtrant, notamment destinée à être utilisée dans une filtration à précouche.

12. Dispositif destiné à être utilisé dans une filtration par couches, comprenant :
un châssis (22) avec au moins une couche filtrante (1) selon l'une quelconque des revendications 1 à 11 ;
une plaque initiale (14) ainsi qu'une plaque terminale (15) pouvant être logées verticalement dans le châssis (22) et entre lesquelles l'au moins une couche filtrante (1) est disposée ;
des moyens (19, 20) de compression de la plaque initiale (14), de l'au moins une couche filtrante (1) ainsi que de la plaque terminale (15) ; et
au moins deux appuis de couche (16) s'étendant parallèlement l'un par rapport à l'autre et en direction de la direction d'action de la pesanteur (A) sous l'au moins une couche filtrante (1) et la plaque terminale (15) ;
**caractérisé en ce que** :
la taille et la forme des évidements (3) de l'au moins une couche filtrante (1) correspondant au nombre et à la distance des appuis de couche (16) du châssis (22).

13. Dispositif selon la revendication 12, **caractérisé en ce que** le dispositif (10) comporte au moins un élément de filtre (12, 13) supplémentaire pouvant être inséré entre l'au moins une couche filtrante (1) et la plaque initiale (14), la plaque terminale (15) et/ou entre deux couches filtrantes (1), ledit élément étant adapté à un flux sortant de filtrat et/ou à un flux entrant d'infiltrat.

14. Dispositif selon l'une quelconque des revendications 12 ou 13, **caractérisé en ce que** la plaque initiale (14), la plaque terminale (15) et/ou l'au moins un élément de filtre (12, 13) comportent au moins deux ouvertures disposées, lors de l'agencement de la plaque initiale (14), de la plaque terminale (15) et/ou de l'au moins un élément de filtre (12, 13) dans l'agencement conforme à sa destination, coaxialement avec les au moins deux ouvertures (2) de l'au moins une couche filtrante (1).

15. Dispositif selon la revendication 14, **caractérisé en ce que** l'au moins une des au moins deux ouvertures de la plaque initiale (14), de la plaque terminale (15) et/ou des éléments de filtre (12, 13) comportent une bride périphérique pouvant être introduite, pour la formation d'une conduite d'infiltrat et/ou d'une conduite de filtrat, à travers au moins une des au moins deux ouvertures (2) de l'au moins une couche filtrante (1).
